(19) Europäisches Patentamt
European Patent Office
Office européen des brevets

(11) EP 4 644 471 A1

(12) EUROPEAN PATENT APPLICATION
published in accordance with Art. 153(4) EPC

(43) Date of publication:
**05.11.2025 Bulletin 2025/45**

(21) Application number: **23912137.9**

(22) Date of filing: **26.12.2023**

(51) International Patent Classification (IPC):
***C08J 11/08*** *(2006.01)* ***B29B 17/02*** *(2006.01)*
***C08G 64/40*** *(2006.01)*

(52) Cooperative Patent Classification (CPC):
**B29B 17/02; C08G 64/40; C08J 11/08;** Y02W 30/62

(86) International application number:
**PCT/JP2023/046661**

(87) International publication number:
**WO 2024/143358 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022 JP 2022208422**
**26.12.2022 JP 2022208423**

(71) Applicant: **Mitsubishi Chemical Corporation**
**Tokyo 100-8251 (JP)**

(72) Inventors:
- **YOKOGI, Masashi**
  **Tokyo 100-8251 (JP)**
- **NAKAMURA, Makoto**
  **Tokyo 100-8251 (JP)**
- **SHIBATA, Hiroki**
  **Tokyo 100-8251 (JP)**

(74) Representative: **Vossius & Partner**
**Patentanwälte Rechtsanwälte mbB**
**Siebertstrasse 3**
**81675 München (DE)**

# (54) RECYCLED POLYCARBONATE RESIN AND METHOD FOR PRODUCING SAME

(57) Provided is a method for producing a recycled polycarbonate resin whose color tone, weather resistance and mechanical physical properties are sufficient for practical use. The production method is a method for producing a recycled polycarbonate resin in which a recycled polycarbonate resin having an Mw/Mn of 2.2 or less is obtained from a spent polycarbonate resin composition containing a polycarbonate resin having an Mw/Mn of 2.8 or more, the method comprising step (S1) of preparing a polycarbonate resin solution by dissolving the spent polycarbonate resin composition in a good solvent containing a methylene chloride solvent and/or a phenol-based solvent, step (S2) of precipitating the recycled polycarbonate resin by mixing the polycarbonate resin solution and a poor solvent containing one or more selected from the group consisting of a ketone-based solvent, an alcohol, a saturated hydrocarbon-based solvent and water, and step (S3) of recovering the precipitated recycled polycarbonate resin.



Processed by Luminess, 75001 PARIS (FR)

## Description

### Technical Field

The present invention relates to a recycled polycarbonate resin, and a method for producing the recycled polycarbonate resin.

### Background Art

Polycarbonate resins are excellent in mechanical properties such as heat resistance and impact resistance, dimensional stability, and transparency. Polycarbonate resin compositions containing a polycarbonate resin are used for various purposes.

For sustainable development, it is important to recycle polycarbonate resins and cycle the resource. Approaches for recycling a polycarbonate resin are roughly divided into three methods: material recycling in which a polycarbonate resin is reclaimed, chemical recycling in which bisphenol used as a raw material for a polycarbonate resin is reclaimed, and thermal recycling in which use is made as source of energy. Patent Literature 1 discloses decomposition of a polycarbonate resin into bisphenol A used as a raw material. Patent Literatures 2 and 3 disclose a method in which a polycarbonate resin is dissolved in a solvent, insoluble substances are removed, and an organic solvent is added to precipitate the polycarbonate resin.

However, a polycarbonate resin contained in a spent polycarbonate resin composition is degraded with use and by ultraviolet rays, and may deteriorate in color tone and mechanical physical properties. Polycarbonate compositions often contain, in addition to a polycarbonate resin, additives, inorganic substances and other polymers, which are difficult to separate. For this reason, the recycling use of spent polycarbonate resin compositions is limited, and most of them are disposed of without reuse.

### Citation List

#### Patent Literature

Patent Literature 1: Japanese Patent Laid-Open No. 2022-75133
Patent Literature 2: Japanese Patent Laid-Open No. 1999-152371
Patent Literature 3: Japanese Patent Laid-Open No. 2004-182746

### Summary of Invention

#### Technical Problem

The method described in Patent Literature 1 relates to chemical recycling in which a polycarbonate resin is decomposed into raw material bisphenol, where the burden accompanying decomposition and purification is heavier than that in material recycling. The methods described in Patent Literatures 2 and 3 can be said to be simpler than the method in which a polycarbonate resin is decomposed into raw material bisphenol, but those documents describe little about the physical properties of the reclaimed polycarbonate resin, and there are cases where practical usefulness is not sufficient.

Under such situations, a recycled polycarbonate resin whose color tone, weather resistance and mechanical physical properties are acceptable for practical use has been desired. The present invention has been made in view of these circumstances, and an object of the present invention is to provide a recycled polycarbonate resin whose color tone, weather resistance and mechanical physical properties are sufficient for practical use, and a method for producing the recycled polycarbonate resin.

#### Solution to Problem

The present inventors have intensively conducted studies for solving the above-described problems, and resultantly found that the following inventions meet the above-described object, leading to the present invention. That is, the present invention relates to the following inventions.

<1> A method for producing a recycled polycarbonate resin in which a recycled polycarbonate resin is obtained from a spent polycarbonate resin composition, wherein Mw/Mn of a polycarbonate resin contained in the spent polycarbonate resin composition is 2.8 or more and Mw/Mn of the recycled polycarbonate resin is 2.2 or less, where Mw/Mn is a ratio between a weight average molecular weight Mw and a number average molecular weight Mn in terms of polystyrene which are measured by gel permeation chromatography, the method comprising the following steps (S1) to (S3):

step (S1): preparing a polycarbonate resin solution by dissolving the spent polycarbonate resin composition in a good solvent containing methylene chloride and/or a phenol-based solvent;
step (S2): precipitating the recycled polycarbonate resin by mixing the polycarbonate resin solution and a poor solvent containing one or more selected from the group consisting of a ketone-based solvent, an alcohol-based solvent, a saturated hydrocarbon-based solvent and water; and
step (S3): recovering the precipitated recycled polycarbonate resin.

<2> The method for producing a recycled polycarbonate resin according to <1>, comprising, before the step (S2), a step of contacting the polycarbonate resin solution and one or more filter aids selected from the group consisting of celite, activated white earth, activated carbon and a synthetic adsorbent, and removing undissolved substances to prepare a solution (L) free of undissolved substances, the solution (L) being used as the polycarbonate resin solution in the step (S2).
<3> The method for producing a recycled polycarbonate resin according to <1>, comprising, before the step (S2), a step of removing undissolved substances from the polycarbonate resin solution to prepare a solution (L) free of undissolved substances, the solution (L) being used as the polycarbonate resin solution in the step (S2).
<4> The method for producing a recycled polycarbonate resin according to any one of <1> to <3>, wherein a proportion of the polycarbonate resin contained in the spent polycarbonate resin composition is 20 % by mass or more.
<5> The method for producing a recycled polycarbonate resin according to any one of <1> to <4>, wherein the spent polycarbonate resin composition contains one or more selected from the group consisting of another resin, an inorganic substance and a low-molecular organic compound.
<6> The method for producing a recycled polycarbonate resin according to any one of <1> to <5>, wherein the good solvent used in the step (S1) is a solvent containing methylene chloride, or a solvent containing 50 % by mass or less (preferably 10 % by mass or more and 50 % by mass or less, more preferably 20 % by mass or more and 50 % by mass or less) of a phenol-based solvent.
<7> The method for producing a recycled polycarbonate resin according to any one of <1> to <6>, wherein the good solvent used in the step (S1) is 200 % by mass or more and 5,000 % by mass or less (preferably 250 % by mass or more and 4,000 % by mass or less, and more preferably 350 % by mass or more and 3,000 % by mass or less) based on the spent polycarbonate resin composition.
<8> The method for producing a recycled polycarbonate resin according to any one of <1> to <7>, wherein the poor solvent used in the step (S2) is 200 % by mass or more and 5,000 % by mass or less (preferably 250 % by mass or more and 4,000 % by mass or less, and more preferably 350 % by mass or more and 3,000 % by mass or less) based on the spent polycarbonate resin composition.
<9> The method for producing a recycled polycarbonate resin according to any one of <1> to <8>, wherein a content of terminal hydroxyl groups in the recycled polycarbonate resin is 200 to 530 ppm by mass (preferably 200 to 520 ppm by mass, more preferably 210 to 510 ppm by mass, and further more preferably 210 to 500 ppm by mass), and a content of structural units contained in a main chain of the recycled polycarbonate resin and each represented by the following formula (1) is 200 to 1,100 ppm by mass (preferably 200 to 1,000 ppm by mass, and more preferably 250 to 900 ppm by mass):

[Formula 1]

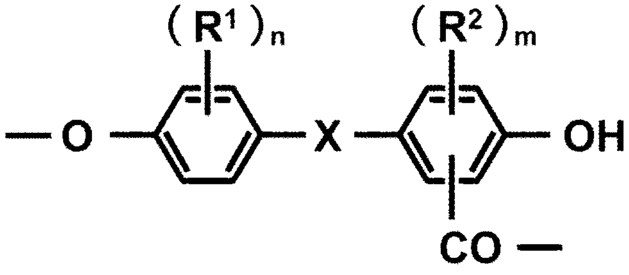

(1)

wherein X is one selected from the group consisting of a single bond, an alkylene group having 2 to 8 carbon atoms, a cycloalkylene group having 5 to 15 carbon atoms, an alkylidene group having 1 to 8 carbon atoms, a cycloalkylidene

group having 5 to 15 carbon atoms, a fluorenylidene group, a xanthenylidene group, thioxanthenylidene group, -O-, -S-, -CO-, -SO- and $-SO_2-$(preferably an alkylidene group having 1 to 8 carbon atoms, a cycloalkylidene group having 5 to 15 carbon atoms, or a fluorenylidene group, more preferably an alkylidene group having 1 to 8 carbon atoms, and further more preferably a propane-2,2-diyl group), $R^1$ and $R^2$ are each independently one selected from the group consisting of a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms (preferably an alkyl group having 1 to 12 carbon atoms, and more preferably an alkyl group having 1 to 5 carbon atoms), and n and m are each independently an integer of 0 to 3 (preferably 0 or 1).

<10> The method for producing a recycled polycarbonate resin according to any one of <1> to <9>, wherein a viscosity average molecular weight of the recycled polycarbonate resin is larger than 19,000 (preferably more than 19,000 and 33,000 or less).

<11> A recycled polycarbonate resin reclaimed from a spent polycarbonate resin composition, wherein Mw/Mn is 2.2 or less (preferably 1.4 or more and 2.2 or less), where Mw/Mn is a ratio between a weight average molecular weight Mw and a number average molecular weight Mn in terms of polystyrene which are measured by gel permeation chromatography.

<12> The recycled polycarbonate resin according to <11>, wherein a content of terminal hydroxyl groups in the recycled polycarbonate resin is 200 to 530 ppm by mass (preferably 200 to 520 ppm by mass, more preferably 210 to 510 ppm by mass, and further more preferably 210 to 500 ppm by mass).

<13> The recycled polycarbonate resin according to <11> or <12>, wherein a content of structural units contained in a main chain of the recycled polycarbonate resin and each represented by the following formula (1) is 200 to 1,100 ppm by mass (preferably 200 to 1,000 ppm by mass, and more preferably 250 to 900 ppm by mass):

[Formula 2]

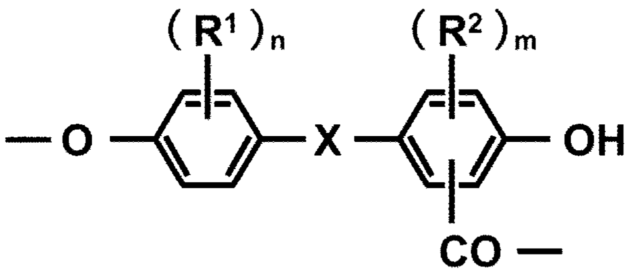

(1)

wherein X is one selected from the group consisting of a single bond, an alkylene group having 2 to 8 carbon atoms, a cycloalkylene group having 5 to 15 carbon atoms, an alkylidene group having 1 to 8 carbon atoms, a cycloalkylidene group having 5 to 15 carbon atoms, a fluorenylidene group, a xanthenylidene group, thioxanthenylidene group, -O-, -S-, -CO-, -SO- and $-SO_2-$(preferably an alkylidene group having 1 to 8 carbon atoms, a cycloalkylidene group having 5 to 15 carbon atoms, or a fluorenylidene group, more preferably an alkylidene group having 1 to 8 carbon atoms, and further more preferably a propane-2,2-diyl group), $R^1$ and $R^2$ are each independently one selected from the group consisting of a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms (preferably an alkyl group having 1 to 12 carbon atoms, and more preferably an alkyl group having 1 to 5 carbon atoms), and n and m are each independently an integer of 0 to 3 (preferably 0 or 1).

<14> The recycled polycarbonate resin according to any one of <11> to <13>, wherein a viscosity average molecular weight of the recycled polycarbonate resin is larger than 19,000 (preferably more than 19,000 and 33,000 or less, more preferably 20,000 or more and 33,000 or less, and further more preferably 21,000 or more and 33,000 or less).

<X1> A method for producing a molded product, comprising the steps of: preparing a recycled polycarbonate resin by the method for producing a recycled polycarbonate resin according to any one of <1> to <10>; and preparing a molded product using the recycled polycarbonate resin.

<Y1> A molded product comprising the recycled polycarbonate resin according to any one of <11> to <14>.

Advantageous Effects of Invention

According to the present invention, there are provided a recycled polycarbonate resin having a color tone, weather resistance and mechanical physical properties which are sufficient for practical use, and a method for producing the recycled polycarbonate resin.

Description of Embodiments

Hereinafter, embodiments of the present invention will be described in detail, but the description of constituent features below gives examples (representative examples) of embodiments of the present invention, and the present invention is not limited to the following as long as the spirit of the present invention is not changed. The term "to" pertaining to a range as used herein should be construed as including the numerical values or physical property values before and after the term.

<Method for producing recycled polycarbonate resin>

The present invention relates to a method for producing a recycled polycarbonate resin in which a recycled polycarbonate resin is obtained from a spent polycarbonate resin composition, the method comprising the following steps (S1) to (S3) (hereinafter, sometimes referred to "the inventive production method").

Step (S1): preparing a polycarbonate resin solution by dissolving the spent polycarbonate resin composition in a good solvent containing methylene chloride and/or a phenol-based solvent.

Step (S2): precipitating the recycled polycarbonate resin by mixing the polycarbonate resin solution and a poor solvent containing one or more selected from the group consisting of a ketone-based solvent, an alcohol-based solvent, a saturated hydrocarbon-based solvent and water.

Step (S3): recovering the precipitated recycled polycarbonate resin.

The inventive production method can be a production method in which a recycled polycarbonate resin having an Mw/Mn of 2.2 or less is obtained from a spent polycarbonate resin composition containing a polycarbonate resin having an Mw/Mn of 2.8 or more.

Here, in the present application, "Mw/Mn" is a ratio between the weight average molecular weight Mw and the number average molecular weight Mn in terms of polystyrene which are measured by gel permeation chromatography.

A characteristic of the inventive production method is that even when a spent polycarbonate resin composition containing a polycarbonate resin having an Mw/Mn of 2.8 or more (for example, an Mw/Mn of 2.8 to 10 or 2.9 to 5.0) is used as a recycle raw material, Mw/Mn of the resulting recycled polycarbonate resin is 2.2 or less because a low-molecular-weight polycarbonate resin and the like can be removed by using a specific good solvent and a specific poor solvent. Unused polycarbonate resins that are commonly used have an Mw/Mw of about 2.5 to 2.9 from the viewpoint of productivity and the like. A polycarbonate resin contained in a spent polycarbonate resin composition (hereinafter, referred to as a "spent polycarbonate resin") may be degraded by heat and ultraviolet rays during use, water vapor and the like. A spent polycarbonate resin is equivalent in Mw/Mn to an unused polycarbonate resin when degraded to a small extent, but has an increased Mw/Mn of, for example, 2.8 or more, 2.9 or more, or 3.0 or more if the degradation proceeds. The use of the inventive production method enables the resulting recycled polycarbonate resin to have an Mw/Mn of 2.2 or less which is smaller than Mw/Mn of a common unused polycarbonate resin.

The inventive production method ensures that even when a raw material containing components other than a polycarbonate resin, such as other resins and additives, is used, the other components can be efficiently removed to obtain a recycled polycarbonate resin whose color tone and the like are acceptable for practical use.

Hereinafter, the steps will be described.

[Step (S1)]

The step (S1) is a step of preparing a polycarbonate resin solution by dissolving a spent polycarbonate resin composition in a good solvent containing methylene chloride and/or a phenol-based solvent.

[Spent polycarbonate resin composition]

The spent polycarbonate resin composition is a post-consumer material and/or a pre-consumer material of a polycarbonate resin composition. The polycarbonate resin composition is a composition containing a polycarbonate resin. For example, the content of the polycarbonate resin in the polycarbonate resin composition is 20 to 100% by mass or 50 to 100% by mass. Examples of the polycarbonate resin composition include those containing a spent polycarbonate resin composition and one or more selected from the group consisting of another resin, an inorganic substance and a low-molecular organic compound, in addition to single polycarbonate resins (PCs). Examples of the polycarbonate resin composition containing the other resin include polymer alloys such as polymer blends of a polycarbonate resin and another resin. The polycarbonate resin composition may contain two or more polycarbonate resins differing in composition and molecular weight.

Examples of the other resin include copolymer resins such as ABS resins which are copolymers of acrylonitrile, butadiene and styrene, and AS resins, polyesters such as polyethylene terephthalate (PET) and polybutylene terephthalate (PBT), and acrylic resin (PMMA). These are often contained in an amount of 20% by mass or more, and the ABS resin is often contained in an amount of about 30% by mass and the polyesters are often contained in an amount of about 50% by mass based on PC.

The spent polycarbonate resin composition may contain additives such as inorganic substances and low-molecular organic compounds. Representable examples of the inorganic substance include glass fibers (GFs) and carbon fibers for enhancing the strength of the polycarbonate resin, and carbon black and titanium oxide as pigments for coloration. The low-molecular organic compound is an organic compound having a molecular weight of 3,000 or less, representative examples of which ultraviolet absorbers and flame-retardants. These are often contained in an amount of 5% by mass or more and less than 50% by mass in the polycarbonate resin composition. In particular, when a polycarbonate resin composition containing glass fibers or the like is to be reclaimed by conventional material recycling, the glass fibers cause decomposition of the polycarbonate resin, leading to a decrease in molecular weight. For this reason, such a polycarbonate resin composition is considered difficult to reclaim by material recycling. The ability to suppress this is also a characteristic of the inventive production method.

The polycarbonate resin typically contains structural units which are repeated bisphenol units and carbonate units and each of which is represented by the following formula (A), and the content of the structural units each represented by the following formula (A) is typically 20 mol% or more, preferably 30 mol% or more, and more preferably 40 mol% or more.

[Formula 3]

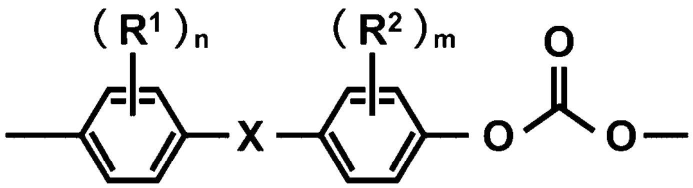

(A)

In the formula (A), X is one selected from the group consisting of a single bond, an alkylene group having 2 to 8 carbon atoms, a cycloalkylene group having 5 to 15 carbon atoms, an alkylidene group having 1 to 8 carbon atoms, a cycloalkylidene group having 5 to 15 carbon atoms, a fluorenylidene group, a xanthenylidene group, thioxanthenylidene group, -O-, -S-, -CO-, -SO- and $-SO_2-$.

The alkylene group having 2 to 8 carbon atoms may be substituted or unsubstituted, and may be linear or branched. Examples of the alkylene group having 2 to 8 carbon atoms include an ethane-1,2-diyl group, a propane-1,2-diyl group, a propane-1,3-diyl group, a butane-1,2-diyl group, a butane-1,4-diyl group, a hexane-1,2-diyl group, and a hexane-1,6-diyl group.

Examples of the cycloalkylene group having 5 to 15 carbon atoms may be substituted or unsubstituted. Examples of the cycloalkylylene group having 5 to 15 carbon atoms include a cyclopropane-1,2-diyl group, and a cyclohexane-1,2-diyl group.

The alkylidene group having 1 to 8 carbon atoms may be substituted or unsubstituted, and may be linear or branched. The alkylidene group having 1 to 8 carbon atoms is preferably a group represented by the following formula (1a).

[Formula 4]

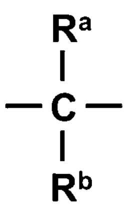

(1a)

$R^a$ and $R^b$ each independently represent a hydrogen atom, an alkyl group having 1 to 7 carbon atoms, a cycloalkyl group having 3 to 7 carbon atoms, an alkoxy group having 1 to 7 carbon atoms, or an aryl group having 6 or 7 carbon atoms. These may be substituted or unsubstituted. Examples thereof include a hydrogen atom, a methyl group, an ethyl group, an n-propyl group, an i-propyl group, an n-butyl group, a t-butyl group, an n-pentyl group, an i-pentyl group, an n-hexyl group, an n-heptyl group, a 2-ethylhexyl group, a methoxy group, an ethoxy group, an n-propoxy group, an i-propoxy group, an n-butoxy group, an i-butoxy group, a t-butoxy group, an n-pentyloxy group, an i-pentyloxy group, an n-hexyloxy group, an n-heptyloxy group, a cyclopropyl group, a cyclobutyl group, a cyclopentyl group, a cyclohexyl group, a cycloheptyl group, a benzyl group, a phenyl group, and tolyl group.

The cycloalkylidene group having 5 to 15 carbon atoms may be substituted or unsubstituted. Examples of the cycloalkylidene group having 5 to 15 carbon atoms include a cyclopropane-1,1-diyl group, a cyclobutane-1,1-diyl group, a cyclopentane-1,1-diyl group, a cyclohexane-1,1-diyl group, a 3,3,5-trimethylcyclohexane-1,1-diyl group, a cycloheptane-1.1.-diyl group, a cyclooctane-1,1-diyl group, a cyclononane-1,1-diyl group, a cyclodecane-1,1-diyl group, a cycloundecane-1,1-diyl group, and a cyclododecane-1,1-diyl group.

X in the formula (A) is preferably an alkylidene group having 1 to 8 carbon atoms, a cycloalkylidene group having 5 to 15 carbon atoms, or a fluorenylidene group, more preferably an alkylidene group having 1 to 8 carbon atoms, and further more preferably a propane-2,2-diyl group.

In the formula (A), $R^1$ and $R^2$ are each independently one selected from the group consisting of a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms. When n or m is 2 or more, a plurality of $R^1$ or a plurality of $R^2$ may be the same groups or different groups. The alkyl group having 1 to 12 carbon atoms, the cycloalkyl group having 1 to 12 carbon atoms, the alkoxy group having 1 to 12 carbon atoms, and aryl group having 6 to 12 carbon atoms may be substituted or unsubstituted.

Examples of $R^1$ and $R^2$ include a fluoro atom, a chloro atom, a bromo atom, a iodo atom, a methyl group, an ethyl group, an n-propyl group, an i-propyl group, an n-butyl group, an i-butyl group, a t-butyl group, an n-pentyl group, an i-pentyl group, an n-hexyl group, an n-heptyl group, an n-octyl group, an n-nonyl group, an n-decyl group, an n-undecyl group, an n-dodecyl group, a cyclopropyl group, a cyclobutyl group, a cyclopentyl group, a cyclohexyl group, a cycloheptyl group, a cyclooctyl group, a cyclododecyl group, a methoxy group, an ethoxy group, an n-propoxy group, an i-propoxy group, an n-butoxy group, an i-butoxy group, a t-butoxy group, an n-pentyloxy group, an i-pentyloxy group, an n-hexyloxy group, an n-heptyloxy group, an n-octyloxy group, an n-nonyloxy group, an n-decyloxy group, an n-undecyloxy group, an n-dodecyloxy group, a benzyl group, a phenyl group, a tolyl group, and a 2,6-dimethylphenyl group.

$R^1$ and $R^2$ are, preferably, each independently an alkyl group having 1 to 12 carbon atoms, and more preferably, each independently an alkyl group having 1 to 5 carbon atoms.

In the formula (A), n and m are each independently an integer of 0 to 3. Each of n and m is preferably independently 0 to 2, and more preferably independently 0 or 1.

In particular, the formula (A) is preferably the following formula (A2).

[Formula 5]

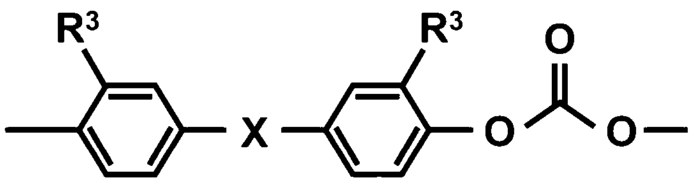

(A2)

In the formula (A2), X is as defined for the formula (A). Preferred forms thereof are the same as those for the formula (A), and X in the formula (A2) is preferably an alkylidene group having 1 to 8 carbon atoms, a cycloalkylidene group having 5 to 15 carbon atoms, or a fluorenylidene group, more preferably an alkylidene group having 1 to 8 carbon atoms, and further more preferably a propane-2,2-diyl group.

In the formula (A2), $R^3$ is one selected from the group consisting of a hydrogen atom, a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms. $R^3$ is preferably a hydrogen atom or an alkyl group having 1 to 12 carbon atoms, more preferably a hydrogen atom or an alkyl group having 1 to 5 carbon atoms, and further more preferably a hydrogen atom or a methyl group.

In the formula (A2), X is preferably a propane-2,2-diyl group, with $R^3$ being a hydrogen atom or a methyl group.

Specifically, examples of the bisphenol unit of the structural unit represented by the above formula (A) include, but are in no way limited to, those derived from bisphenol, such as 2,2-bis(4-hydroxyphenyl)propane, 2,2-bis(4-hydroxy-3-methylphenyl)propane, 2,2-bis(4-hydroxy-3,5-dimethylphenyl)propane, 1,1-bis(4-hydroxy-3-methylphenyl)cyclohexane, 9,9-bis(4-hydroxy-3-methylphenyl)fluorene, 3,3-bis(4-hydroxyphenyl)pentane, 3,3-bis(4-hydroxy-3-methylphenyl) pentane, 2,2-bis(4-hydroxyphenyl)pentane, 2,2-bis(4-hydroxy-3-methylphenyl) pentane, 3,3-bis(4-hydroxyphenyl)heptane, 3,3-bis(4-hydroxy-3-methylphenyl)heptane, 2,2-bis(4-hydroxyphenyl) heptane, 2,2-bis(4-hydroxy-3-methylphenyl) heptane, 4,4-bis(4-hydroxyphenyl)heptane and 4,4-bis(4-hydroxy-3-methylphenyl)heptane.

In particular, the bisphenol unit of the structural unit represented by the above formula (A) is preferably a structure

derived from one selected from the group consisting of 2,2-bis(4-hydroxyphenyl)propane, 2,2-bis(4-hydroxy-3-methylphenyl)propane, 2,2-bis(4-hydroxy-3,5-dimethylphenyl)propane and 1,1-bis(4-hydroxy-3-methylphenyl)cyclohexane, more preferably a structure derived from 2,2-bis(4-hydroxyphenyl)propane or 2,2-bis(4-hydroxy-3-methylphenyl)propane, and particularly preferably a structure derived from 2,2-bis(4-hydroxyphenyl) propane.

The post-consumer material that is used as a spent polycarbonate resin composition is typically a used polycarbonate resin composition after incorporation into a manufactured article as a molded product or indoor or outdoor use as an outer packaging by consumers. Examples of the molded product include housings for electronic equipment, miscellaneous goods, lamps for lighting, automobile interiors and exteriors, transport containers, and building materials. The pre-consumer material includes purge resins generated in polymerization and compounding, and polycarbonate resins having failed to meet the quality of ready-made articles.

From the viewpoint of burden on the environment, the spent polycarbonate resin composition is preferably a post-consumer material, and the period of use (period spent for use) is preferably 3 years or more, more preferably 5 years or more, and further more preferably 7 years or more. An excessively short period of use is not preferable from the viewpoint of burden on the environment because the polycarbonate resin in the used polycarbonate resin composition (used polycarbonate resin) is recycled although degradation has not occurred. An excessively long period of use may lead to considerable degradation of the used polycarbonate resin, resulting in an inability to sufficiently recover the physical properties even when reclamation is performed. In this respect, the period of use is preferably 30 years or less, and more preferably 20 years or less.

A spent polycarbonate resin composition containing a spent polycarbonate resin having an Mw/Mn of 2.8 or more may be used. Typically, the post-consumer material tends to have an increased value of Mw/Mn because the molecular weight decreases due to ultraviolet degradation. Thus, a spent polycarbonate resin composition with a spent polycarbonate resin having an Mw/Mn of 2.9 or more, 3.0 or more, or the like may be used.

The spent polycarbonate resin composition may be directly used in a shape of a resin composition as a post-consumer material or a pre-consumer material, or may be used after being divided into pieces with an appropriate size by cutting, crushing/pulverization or the like as appropriate. The division method such as cutting or crushing/pulverizing is not particularly limited, and examples of the method that can be used include cutting that involves the use of a cutting tool; fusion cutting that involves cutting with gas, plasma, laser or the like; tearing; cutting that involves the use of a shredder; coarse crushing that involves crushing to 20 cm or less with a jaw crusher or a revolving crusher; medium crushing that involves crushing to 1 cm or less with a revolving crusher, a cone crusher or a mill; and pulverization that involves crushing to 1 mm or less with a mill. These methods may be carried out alone, or carried out in combination of two or more thereof.

An excessive large shape of the spent polycarbonate resin composition is not preferable because the dissolution time increases. Thus, a pulverized product obtained by pulverizing the polycarbonate resin composition is preferably used as the spent polycarbonate resin composition. The pulverized product of the polycarbonate resin composition preferably has a shape of 53 mm or less, more preferably has a shape of 22.4 mm or less, and more preferably has a shape of 11.2 mm or less. On the other hand, because an excessively small shape may lead to scattering as dust in loading into an apparatus, the pulverized product preferably has a shape of 2.8 mm or more, and more preferably has a shape of 4.75 mm or more.

The term "53 mm or less" means passage through a sieve of 53 mm in nominal aperture specified in JIS-Z-8801-1 (2019), the term "22.4 mm or less" means passage through a sieve of 22.4 mm in the nominal aperture, and the term "11.2 mm or less" means passage through a sieve of 11.2 mm in the nominal aperture. The term "2.8 mm or more" means failure to pass through a sieve of 2.8 mm in the nominal aperture, and the term "4.75 mm or more" means failure to pass through a sieve of 4.75 mm in the nominal aperture.

(Cleaning of spent polycarbonate resin composition)

The spent polycarbonate resin composition may be cleaned with water or an organic solvent, and then dissolved in a good solvent. Examples of the organic solvent include acetone, acetonitrile, ethanol, methanol, hexane, cyclohexane, heptane, and methylisobutylketone (MIBK). These may be used in combination. By removing only degraded polycarbonate resin on the surface by cleaning instead of dissolving the spent polycarbonate resin itself, the quality of the resulting recycled polycarbonate resin can be improved.

(Good solvent)

The good solvent for dissolving the spent polycarbonate resin composition contains methylene chloride and/or a phenol-based solvent. Examples of the phenol-based solvent include phenol, cresol, xylenol, ethylphenol, propylphenol, butylphenol, methoxyphenol, ethoxyphenol, propoxyphenol, butoxyphenol, benzylphenol, phenylphenol, chlorophenol, dichlorophenol, and chloromethylphenol. Among them, methylene chloride and phenol, cresol, and catechol are preferable. The proportion of the methylene chloride and/or phenol-based solvent is not limited as long as it allows the spent polycarbonate resin composition to be dissolved, and the ratio of those in total to the good solvent is preferably 10% by

mass or more, more preferably 20% by mass or more, and further more preferably 30% by mass or more. That is, when the good solvent contains methylene chloride, and does not contain a phenol-based solvent, the ratio of the methylene chloride to the good solvent is preferably in the above-described range. When the good solvent contains a phenol-based solvent, and does not contain methylene chloride, the ratio of the phenol-based solvent to the good solvent is preferably in the above-described range. When the good solvent contains methylene chloride and a phenol-based solvent, the proportion of the methylene chloride and the phenol-based solvent in total to the good solvent is preferably in the above-described range.

When, in the case where the spent polycarbonate resin composition contains other resins, a solvent containing a phenol-based solvent is selected as the good solvent for the spent polycarbonate resin composition, the ratio of the phenol-based solvent to the good solvent is preferably 50% by mass or less. This is because when the polycarbonate resin composition contains polyesters such as PET and PBT, these resins may also be dissolved in the phenol-based solvent. Thus, in the case where the spent polycarbonate resin composition contains other resins, the lower limit of the ratio of the phenol-based solvent to the good solvent is preferably 10% by mass or more, and more preferably 20% by mass or more, and the upper limit of the ratio is preferably 50% by mass or less.

On the other hand, when a solvent containing methylene chloride is selected as the good solvent, the proportion of the methylene chloride to the good solvent is not particularly limited even though the spent polycarbonate resin composition contains other resins. Thus, the lower limit of the ratio of the methylene chloride to the good solvent is preferably 10% by mass or more, and more preferably 20% by mass or more, and the methylene chloride may constitute 100% by mass of the good solvent.

The good solvent may contain solvents other than methylene chloride and a phenol-based solvent, specific examples of which include aromatic hydrocarbon-based solvents such as toluene and xylene; cyclohexanone; tetrahydrofuran (THF); acetonitrile; dimethyl carbonate; hexafluoroisopropyl alcohol; and water. For the good solvent, the above-mentioned solvents can be used in combination as appropriate such that the spent polycarbonate resin composition is dissolved at a dissolution temperature.

The amount of the good solvent is preferably 200% by mass or more, more preferably 250% by mass or more, and further more preferably 350% by mass or more based on the mass of the spent polycarbonate resin composition. A small proportion of the good solvent may lead to an extremely high viscosity of the solution, which causes difficulty in stirring and dissolution, and a decreased filtration rate and attachment of a filtrate to filtering media during filtration, resulting in a decreased yield. The amount of the good solvent is preferably 5,000% by mass or less, more preferably 4,000% by mass or less, and further more preferably 3,000% by mass or less based on the mass of the spent polycarbonate resin composition. A large proportion of the good solvent may lead to an increased solubility of the polycarbonate resin, which increases the amount of a polycarbonate resin that remains dissolved in the good solvent and is not deposited even when the poor solvent is added in step (3), resulting in deterioration of the yield. Thus, the amount of the good solvent is preferably 200% by mass or more and 5,000% by mass or less, more preferably 250% by mass or more and 4,000% by mass or less, and further more preferably 350% by mass or more and 3,000% by mass or less based on the mass of the spent polycarbonate resin composition.

(Dissolution temperature)

It is preferable to control the temperature (the temperature of a solution in a dissolution bath) when the spent polycarbonate resin composition is dissolved in the good solvent. If the temperature is not controlled, the dissolution time may become uneven, leading to generation of an undissolved content in solution feeding for a next step. The temperature is preferably equal to or lower than the boiling point of the good solvent. If the temperature is above the boiling points of the good solvent, a condenser is required for the dissolution bath, and the process becomes complicated. The specific temperature of the good solvent (the temperature of the solution in the dissolution bath) is preferably 10°C or higher, more preferably 15°C or higher, and further more preferably 20°C or higher. An excessively low temperature reduces the solubility of the polycarbonate resin, so that it takes time for dissolution. In solution feeding for a next step, it may take time for the solution feeding, and in filtration, a heavy burden may accompany the filtration. The dissolution temperature is preferably 140°C or lower, more preferably 130°C or lower, and further more preferably 120°C or lower. If the temperature is excessively high, the polycarbonate resin may be degraded by heat, and colored. Thus, the dissolution temperature is preferably 10 to 140°C, more preferably 15 to 130°C, and further more preferably 20 to 120°C.

(Dissolution time)

The dissolution time is preferably 20 minutes or more, more preferably 40 minutes or more, and further more preferably 1 hour or more. The dissolution time is preferably 5 hours or less, 4 hours or less, and 3 hours or less. An excessively short dissolution time may lead to an increase in undissolved content, resulting in reduction of the yield, and blocking in the process. An excessively long dissolution time may cause decomposition and coloration of the polymer.

Thus, the dissolution time is preferably 20 minutes to 5 hours, more preferably 40 minutes to 4 hours, and further more preferably 1 hour to 3 hours.

(Removal of undissolved substances)

When the solution (polycarbonate resin solution) obtained in step (S1) does not contain undissolved substances, and thus is a uniform solution, the solution can be directly used in step (S2). On the other hand, when the polycarbonate resin solution contains undissolved substances (degraded substances, foreign resin, additives, contaminants and the like), and thus is a suspension solution, it is necessary to carry out, before step (S2), a step of removing undissolved substances from the polycarbonate resin solution to prepare a solution (L) free of undissolved substances. The obtained solution (L) is used in step (S2).

Examples of the method for removing undissolved substances from the polycarbonate resin solution include methods using a filter, such as filtration, centrifugal separation, and cyclonic filtration, and methods in which solid-liquid separation is performed on standing separation, centrifugal separation, floating separation or the like, and the liquid phase is taken by wiping. In the case where insoluble substances are removed using a filter, any of a paper filter, a glass filter, a bag filter, a candle filter and the like may be used. The filtering may involve a plurality of steps or a plurality of methods. The smallest aperture of the filtering media is preferably 5 μm or less, more preferably 2 μm or less, and further more preferably 1 μm or less. If the aperture is excessively large, removal of foreign substances becomes insufficient. If the aperture is excessively small, the filtering property tends to deteriorate.

(Filter aid)

A filter aid may be used for facilitating the removal of degraded substances, foreign resin, additives and contaminants contained in the spent polycarbonate resin composition. That is, a step of contacting the polycarbonate resin solution and a filter aid, and then removing undissolved substances to prepare a solution (L) free of undissolved substances may be included before step (S2), with the solution (L) being used in step (S2).

Specific examples of the filter aid include celite, activated white earth, alumina, activated carbon, silica gel, cellulose, bentonite, zeolite, and synthetic adsorbents. Among them, one or more filter aids selected from the group consisting of celite, activated white earth, activated carbon and a synthetic adsorbent are preferable.

Examples of the activated white earth include GALLEON EARTH (registered trademark) and GALLEONITE (registered trademark) celite manufactured by Mizusawa Industrial Chemicals, Ltd., and NIKKA-NITE manufactured by Toshin Chemicals Co., Ltd.

Examples of the shape of the activated carbon include a shape of powder, a shape of particle (fragment, grain, sphere, cylinder and the like) and a shape of fiber, any of which may be used. As a raw material for the activated carbon, any of sawdust, palm shells, coal, charcoal and the like can be used. The activated carbon may be activated carbon obtained by activation using a method such as a gas activation method, a steam activation method or a chemical activation method.

The synthetic adsorbent is a bridged polymer having a porous structure. Examples of the synthetic adsorbent include aromatic adsorbents, aromatic-modified adsorbents, and methacrylic adsorbents, any of which may be used. Specific examples thereof include SEPABEADS (registered trademark) manufactured by Mitsubishi Chemical Corporation.

The method for contacting a polycarbonate resin solution and a filter aid is not particularly limited. The filter aid may be mixed during preparation of the polycarbonate resin solution in step (S1), or the filter aid may be contacted after preparation of the polycarbonate resin solution in step (S1). A plurality of methods may be combined to contact the polycarbonate resin solution with the filter aid one or more times.

For example, in step (S1), the spent polycarbonate resin composition, the good solvent and the filter aid are mixed to dissolve the polycarbonate resin in the good solvent. The resulting solution is a suspension solution in which the polycarbonate resin is dissolved and the filter aid is dispersed. The suspension solution is filtered to obtain a filtrate (solution (L)), which can be used in step (S2).

In the case where the filter aid is contacted after preparation of the polycarbonate resin solution in step (S1), the filter aid may be directly added to the polycarbonate resin solution to establish the contact, or may be packed onto the filtering media, and contacted with the polycarbonate resin solution, or the contact may be established by packing the filter aid in a columnar shape, to which the polycarbonate resin solution is poured.

The amount of the filter aid used is not limited as long as it is an amount which allows colored components and impurities to be sufficiently adsorbed. The amount of the filter aid used is preferably 10% by mass, more preferably 20% by mass or more, and further more preferably 30% by mass or more, and may be 40% by mass or more, based on the mass of the spent polycarbonate resin composition dissolved. If the amount of the filter aid is excessively small, it may be impossible to sufficiently remove colored components and impurities. The amount of the filter aid used is preferably 5,000% by mass or less, and more preferably 2,000% by mass or less based on the mass of the spent polycarbonate resin

composition dissolved. If the amount of the filter aid is excessively large, the recycled polycarbonate resin may contain a large amount of impurity components eluted from the filter aid. Thus, the amount of the filter aid used is preferably 10 to 5,000% by mass, more preferably 20 to 5,000% by mass, and further more preferably 30 to 2,000% by mass based on the mass of the spent polycarbonate resin composition dissolved.

The filter aid can be repeatedly used by regeneration before and after the use. In the regeneration of the filter aid before and after the use, the filter aid may be cleaned with steam, heat or an organic solvent. The cleaning may remove impurities contained in the filter aid, and have an effect of reducing the amount of impurities in the resulting recycled polycarbonate resin.

[Step (S2)]

Step (S2) is a step of precipitating the recycled polycarbonate resin by mixing the polycarbonate-dissolved solution with a poor solvent.

(Poor solvent)

The poor solvent used in step (S2) is intended to precipitate the recycled polycarbonate resin, and contains one or more selected from the group consisting of a ketone-based solvent, ana an alcohol-based solvent, a saturated hydrocarbon-based solvent, and water. Specific examples thereof include ketone-based solvents such as acetone, methyl ethyl ketone, methyl isobutyl ketone (MIBK) and cyclohexanone; alcohol-based solvents such as methanol, ethanol and isopropyl alcohol; saturated hydrocarbon-based solvents such as hexane, heptane and cyclohexane; and water.

As long as it can precipitate the recycled polycarbonate resin, the poor solvent may contain solvents other than ketone-based solvents, alcohol-based solvents, saturated hydrocarbon-based solvents and water, examples of which include toluene and xylene; THF; acetonitrile; dimethyl carbonate; and hexafluoroisopropyl alcohol.

The poor solvent preferably contains one or more selected from the group consisting of acetone, ethanol, water, methanol, isopropyl alcohol, hexane, cyclohexane, heptane and MIBK. Among them, acetone is preferable because it has a low boiling point, so that solvent recovery and the like are facilitated.

The proportion of one or more solvents selected from the group consisting of a ketone-based solvent, an alcohol-based solvent, a saturated hydrocarbon-based solvent and water is not limited as long as it allows the polycarbonate resin to be deposited, and the ratio of those solvents in total to the entire poor solvent is preferably 10% by mass or more, more preferably 20% by mass or more, and further more preferably 30% by mass or more.

The poor solvent is preferably 200% by mass or more, more preferably 250% by mass or more, and further more preferably 350% by mass or more based on the mass of the spent polycarbonate resin composition. A small proportion of the poor solvent may lead to failure to sufficiently generate a precipitate, and reduced flowability in the subsequence step (S3). The poor solvent is preferably 5,000% by mass or less, more preferably 4,000% by mass or less, and further more preferably 3,000% by mass or less based on the spent polycarbonate resin composition. If the proportion of the poor solvent is high, the polycarbonate resin may be dissolved even in the poor solvent, resulting in deterioration of the yield. Thus, the amount of the poor solvent is preferably 200% by mass or more and 5,000% by mass or less, more preferably 250% by mass or more and 4,000% by mass or less, and further more preferably 350% by mass or more and 3,000% or less based on the mass of the spent polycarbonate resin composition.

It is preferable to control the temperature (the temperature of a solution in an apparatus) when the recycled polycarbonate resin is deposited (precipitated) by adding the poor solvent. If the temperature is not controlled, the precipitation time may become uneven, leading to deterioration of the yield due to insufficient precipitation in solution feeding for a next step. The temperature during the deposition operation is preferably equal to or lower than the boiling points of the good solvent and the poor solvent. If the temperature is above the boiling points of the good solvent and the poor solvent, the solubility of the polycarbonate resin increases, so that it is difficult to sufficiently recover the polycarbonate resin. The specific temperature of the solution (temperature of a solution in an apparatus) during the deposition operation is preferably 10°C or higher, more preferably 15°C or higher, and further more preferably 20°C or higher. If the temperature is excessively low, it may take time for solution feeding in the solution feeding for a next step, and a heavy burden may accompany filtration in the filtration. The temperature is preferably 140°C or lower, more preferably 130°C or lower, and further more preferably 120°C or lower. If the temperature is excessively high, the polycarbonate resin may be degraded by heat, and colored. Thus, the temperature at which the recycled polycarbonate resin is deposited is preferably 10 to 140°C, more preferably 15 to 130°C, and further more preferably 20 to 120°C.

The good solvent and the poor solvent are preferably a combination a good solvent containing methylene chloride and/or a phenol-based solvent and a poor solvent containing one selected from the group consisting of a ketone-based solvent, an alcohol-based solvent, a saturated hydrocarbon-based solvent and water, and more preferably the combination in which each of the good solvent used in step (S1) and the poor solvent used in step (S2) is 200% by mass or more and 5,000% by mass or less based on the spent polycarbonate resin composition.

The ratio of the poor solvent to the good solvent is preferably 0.4 or more, and more preferably 1 or more, and preferably 2 or less. If the ratio of the poor solvent to the good solvent is excessively small, the amount of the recycled polycarbonate resin deposited decreases. If the ratio of the poor solvent to the good solvent is excessively large, the process may excessively extend, and the burden accompanying solvent recovery may increase. Thus, the ratio of the poor solvent to the good solvent is preferably 0.4 to 2, and more preferably 1 to 2.

[Step (S3)]

Step (S3) is a step of recovering the recycled polycarbonate resin.

(Collection of recycled polycarbonate resin)

By step (S2), a suspension is obtained in which a recycled polycarbonate resin deposited is suspended in solvents (good solvent and poor solvent). The recycled polycarbonate resin in the suspension is collected using methods such as centrifugation and filtration. The temperature of the suspension is preferably 10°C or higher and 120°C or lower. If the temperature is excessively low, the viscosity increases. If the temperature is excessively high, the resin may be degraded.

The recycled polycarbonate resin collected is preferably dried under reduced pressure or at normal pressure because it contains solvents (good solvent and poor solvent). The drying temperature is preferably 30 to 120°C. If the drying temperature is excessively low, it takes much time for drying. If the drying temperature is excessively high, the polycarbonate resin may be degraded.

(Solvent used)

It is preferable that the solvents used in the steps be separated by distillation or a film, and each reused as a good solvent or a poor solvent. Upon the reuse, 2 to 30% by mass of the solvents may be disposed of. If the amount of disposition is small, impurities may accumulate during the process, leading to an increased amount of impurities in the recycled polycarbonate resin. If the amount of disposition is large, the amount of solvents used increases, resulting in increased burden on the environment.

Steps (S1) to (S3) may be repeated two or more times. That is, the recycled polycarbonate resin collected in step (S3) may be, again, dissolved in the good solvent, and then precipitated by adding the poor solvent. The steps may be identical or different in solvents used. When steps (S1) to (S3) are repeated, the number of the repetitions is appropriately determined according to a use purpose and the like using indexes such as Mw/Mn and the L value of the recycled polycarbonate resin which will be described later. By repeating steps (S1) to (S3) two or more times, the amount of impurities contained in polycarbonate recycled decreases. On the other hand, an excessively large number of repetitions may lead to a decreased amount of recovery. In this respect, when steps (S1) to (S3) are repeated, the number of the repetitions is preferably 2 or 3.

[Recycled polycarbonate resin]

The recycled polycarbonate resin obtained by the method for producing a recycled polycarbonate resin according to the present invention (hereinafter, sometimes referred to simply as a "recycled polycarbonate resin") preferably has a structure equivalent to that of the spent polycarbonate resin in most part, contains structural units each represented by the above formula (A), and has the following characteristics.

(Mw/Mn)

Mw/Mn of the recycled polycarbonate resin is 2.2 or less, more preferably 2.1 or less, and further more preferably 2.0 or less. If the ratio is higher than 2.2, mechanical physical properties, the color tone and weather resistance tend to deteriorate. The lower limit of Mw/Mn is not particularly limited, and can be arbitrarily set to, for example, 1.4 or more, 1.5 or more, 1.6 or more, or 1.7 or more. The lower limit of Mw/Mn may be appropriately selected with production efficiency and the like taken into account. Thus, Mw/Mn of the recycled polycarbonate resin is preferably 1.4 to 2.2, more preferably 1.5 to 2.1, and further more preferably 1.5 to 2.0.

(Terminal hydroxyl group (terminal OH))

The lower the content of terminal hydroxyl groups, the better the hydrolysis resistance. Thus, the terminal hydroxyl groups in an unused polycarbonate resin that is typically used are 150 ppm by mass or less. On the other hand, in

the spent polycarbonate resin, the terminal hydroxyl groups are often 200 ppm by mass or more due to, for example, degradation. In the recycled polycarbonate resin of the present invention, the lower limit of the content of terminal hydroxyl groups is typically 200 ppm by mass or more, or 210 ppm by mass or more. For setting the content of terminal hydroxyl groups in the recycled polycarbonate resin to less than 200 ppm by mass, selection of spent polycarbonate resin compositions is required, so that a heavy burden accompanies the production as a whole. On the other hand, excessive terminal hydroxyl groups is likely to deteriorate hydrolysis resistance (weather resistance). In this respect, the content of terminal hydroxyl groups in the recycled polycarbonate resin is preferably as small as 530 ppm by mass or less, more preferably 520 ppm by mass or less, more preferably 510 ppm by mass or less, and more preferably 500 ppm by mass or less. Thus, the content of terminal hydroxyl groups in the recycled polycarbonate resin is preferably 200 to 530 ppm by mass, more preferably 200 to 520 ppm by mass, and further more preferably 210 to 510 ppm by mass.

(Content of structural units each represented by formula (1))

The recycled polycarbonate resin preferably contains, in the main chain thereof, 200 to 1,100 ppm by mass of structural units represented by the following formula (1) (hereinafter, referred to as a "branch component (1)".

[Formula 6]

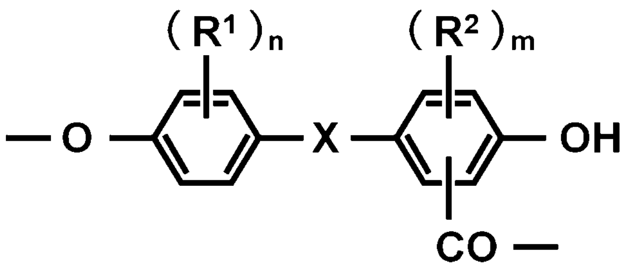

(1)

In the formula (1), X, $R^1$, $R^2$, n and m are as defined for the formula (A). X, $R^1$, $R^2$, n and m in the formula (1) and X, $R^1$, $R^2$, n and m in the formula (A) are identical. For example, when X in the formula (A) is a single bond, X in the formula (1) is also a single bond.

The recycled polycarbonate resin preferably contains structural units each represented by the formula (A2), and the formula (1) is preferably the following formula (2).

[Formula 7]

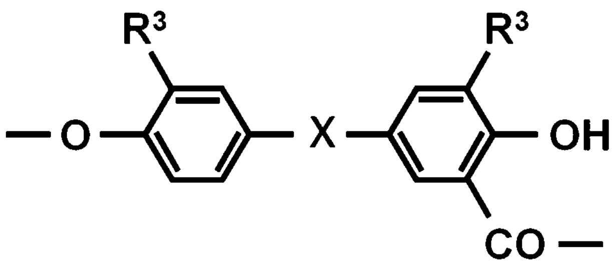

(2)

In the formula (2), X and $R^3$ are as defined for the formula (A2), X and $R^3$ in the formula (2) and X and $R^3$ in the formula (A2) are identical.

In the formula (2), X is preferably a propane-2,2-diyl group, with $R^3$ being a hydrogen atom or a methyl group, as in the formula (A2).

In most of unused polycarbonate resins that are commonly used, the content of the branch component (1) is less than 200. On the other hand, in many of spent polycarbonate resins, the content of the branch component (1) is 250 ppm by mass or more due to degradation by heat and ultraviolet rays. In the recycled polycarbonate resin of the present invention, the lower limit of the content of the branch component (1) is typically 200 ppm by mass or more, or 250 ppm by mass or more. For ensuring that the content of the branch component (1) in the recycled polycarbonate resin is equivalent to that in the unused polycarbonate resin, selection of spent polycarbonate resin compositions is required, so that a heavy burden accompanies the production as a whole. On the other hand, an excessively large amount of the branch component (1) tends to lead to poor mechanical physical properties, and deterioration of weather resistance. In this respect, the content of

the branch component (1) in the recycled polycarbonate resin is preferably 1,100 ppm by mass or less, more preferably 1,000 ppm by mass or less, and further more preferably 900 ppm by mass or less.

(Viscosity average molecular weight)

The viscosity average molecular weight (Mv) calculated from the viscosity of a recycled polycarbonate resin solution is preferably more than 19,000, more preferably 20,000 or more, and further more preferably 21,000 or more. The upper limit thereof is not particularly limited, and is preferably 33,000 or less. If the viscosity average molecular weight is equal to or smaller than the lower limit value, the mechanical physical properties and the alkali resistance of the recycled polycarbonate resin of the present invention deteriorate, which is not preferable. If the viscosity average molecular weight exceeds the upper limit value, the flowability of the recycled polycarbonate resin of the present invention tends to become insufficient, which is not preferable. From such a viewpoint, the viscosity average molecular weight (Mv) of the recycled polycarbonate resin of the present invention is preferably more than 19,000 and 33,000 or less, more preferably 20,000 or more and 33,000 or less, and further more preferably 21,000 or more and 33,000 or less.

(L value)

The L value of the recycled polycarbonate resin is preferably 80 or more, more preferably 85 or more, and further more preferably 90 or more as measured by reflectometry. A low L value leads to a poor color tone and low transparency when the recycled polycarbonate resin is molded with a molded article.

(3 mmYI)

The yellow index (YI) value (3 mmYI) of a 3 mm-thick molded product formed from the recycled polycarbonate resin is preferably 2.2 or less, more preferably 2.1 or less, and further more preferably 2.0 or less as measured according to ASTM D1925. If 3 mmYI is excessively high, a yellow tint often develops, leading to a limitation on applications that are covered.

(Weather resistance test)

Where ΔYI is an amount of increase in YI after a 3 mm-thick molded product formed from the recycled polycarbonate resin is irradiated at an illumination intensity of 60 $W/m^2$ for 25 hours by a xenon lamp, ΔYI is preferably 1.5 or less, more preferably 1.4 or less, and further more preferably 1.3 or less. If ΔYI is excessively high, yellowing occurs during outdoor use, leading to a limitation on applications.

(Izod impact strength (low-temperature impact))

The Izod impact strength (notched Izod impact strength at low temperature) measured at -20°C according to ASTM D256 is preferably 150 J/m or more, more preferably 180 J/m or more, and further more preferably 230 J/m or more. An excessively low Izod impact strength leads to fragility under a special use condition such as a low temperature, and a high possibility that characteristics intrinsic to polycarbonate are not exhibited.

[Method for using recycled polycarbonate resin]

The recycled polycarbonate resin can be used for the same purposes as unused polycarbonate resins as a material that causes little burden on the environment. For example, the recycled polycarbonate resin can be widely used for housings and screens of mobile phones and the like, automobile interiors and exteriors, displays, medical equipment, building materials, and the like.

The recycled polycarbonate resin may be used alone in an amount of 100% to form a molded product, or may be used in mixture with a spent polycarbonate resin or an unused (new) polycarbonate resin. Additives may be blended, and a polymer alloy with resins other than a polycarbonate resin may be used. As the additives and the alloy, those that are commonly used can be appropriately used.

The recycled polycarbonate resin can be used in, for example, a method for producing a molded product, comprising the steps of preparing a recycled polycarbonate resin by the method for producing a recycled polycarbonate resin according to the present invention, and preparing a molded product using the obtained recycled polycarbonate resin. This enables the obtainment of a molded product comprising a recycled polycarbonate resin. Examples of the molded product include pellets; and members or products such as housings, automobile interiors/exteriors members, display members, medical equipment members, and building materials. As a method for preparing a molded product, the same

method as in the case of use of a conventional unused polycarbonate resin can be used, and other resins and additives can be appropriately blended. The members or products may be produced using the recycled polycarbonate resin, or may be produced using pellets formed from the recycled polycarbonate resin.

## Examples

Hereinafter, the present invention will be described in further detail on the basis of Examples, but the present invention is not limited to Examples below as long as the spirit of the present invention is not changed.

[Weight average molecular weight (Mw), number average molecular weight (Mn) and Mw/Mn]

As an analyzer, "HLC-8020" manufactured by TOSOH CORPORATION was used. As columns, four columns (diameter 7.8 mm, length 300 mm) filled with, respectively, "TSK 5000HLX", "4000HLX, 3000HLX" and "2000HLX" manufactured by TOSOH CORPORATION, as fillers, were connected and used. As an eluent, tetrahydrofuran was used.

A calibration curve was prepared using standard polystyrene manufactured by Chemco Plus Scientific Co., Ltd. (molecular weight: 761 (Mw/Mn ≤ 1.14), 2,000 (Mw/Mn ≤ 1.20), 4,000 (Mw/Mn ≤ 1.06), 9,000 (Mw/Mn ≤ 1.04), 17,500 (Mw/Mn ≤ 1.03), 50,000 (Mw/Mn ≤ 1.03), 233,000 (Mw/Mn ≤ 1.05), 600,000 (Mw/Mn ≤ 1.05) and 900,000 (Mw/Mn ≤ 1.05)).

For the measurement, Mw and Mn were determined in terms of polystyrene from charts detected by the refractive index, and Mw/Mn was calculated.

[Viscosity average molecular weight (Mv)]

The viscosity average molecular weight [Mv] is a value obtained by determining an intrinsic viscosity [η] (unit: dl/g) at a temperature of 20°C with an Ubbelohde viscometer using methylene chloride as a solvent, followed by calculation from the Schnell's viscosity equation, that is, $\eta = 1.23 \times 10^{-4} Mv^{0.83}$. The intrinsic viscosity [η] is a value obtained by measuring a specific viscosity [$\eta_{sp}$] at each solution concentration [C] (g/dl), followed by calculation from the following expression.

[Expression 1]

$$\eta = \lim_{c \to 0} \eta_{sp}/C$$

[Content of terminal hydroxyl groups]

The amount of terminal hydroxyl groups in the polycarbonate resin was measured by performing colorimetric determination in the same manner as in colorimetric determination based on a titanium tetrachloride/acetic acid method (a method described in Macromol. Chem. 88 215 (1965)).

[Content of compound (PSA) represented by formula (1) and contained in polycarbonate resin]

First, 0.5 g of a polycarbonate resin was dissolved in 5 mL of methylene chloride, 45 mL of methanol and 5 mL of a 25 mass% sodium hydroxide aqueous solution were then added, and the mixture was stirred at 70°C for 30 minutes to perform hydrolysis (methylene chloride solution). Thereafter, 6 N hydrochloric acid was added to the methylene chloride solution to make the solution have a pH of about 2, and the solution was adjusted to 100 mL with pure water.

Next, 20 μL of the adjusted methylene chloride solution was injected into a liquid chromatography, and the content (unit: ppm by mass) of the compound represented by the formula (1) was measured.

The liquid chromatography and the measurement conditions are as follows.

- Liquid chromatography: LC-10AD manufactured by Shimadzu Corporation
- Column: YMC PACK ODS-AM M-307-3 4.6 mm ID × 75 mmL
- Detector: UV 280 nm
- Eluent: (A) 0.05 vol% trifluoroacetic acid aqueous solution (B) methanol
- Gradient conditions: 0 min (B = 40% by volume), 25 min (B = 95% by volume)

The content of the compound (PSA) represented by the formula (1) was calculated from the area of each peak on

the basis of a calibration curve prepared with bisphenol A.

[L value]

The polycarbonate resin was put in a circular cell, which was then covered with ZERO BOX. Measurement was performed in a reflectance mode with a spectrophotometer SE6000 manufactured by NIPPON DENSHOKU INDUSTRIES Co., Ltd. to determine the L value.

[3 mmYI (yellow index)]

Using a small injection molding machine (C, Mobile from SHINKO SELLBIC Co., LTD.), a polycarbonate resin plate of 3 mm in thickness, 25 mm in length and 25 mm in width was formed.
The color tone of the obtained molded product (plate) was measured according to ASTM D1925 using a spectrophotometric colorimeter CM-5 manufactured by KONICA MINOLTA, INC.

[ΔYI (weather resistance test)]

Using a small injection molding machine (C, Mobile from SHINKO SELLBIC Co., LTD.), a polycarbonate resin plate of 3 mm in thickness, 25 mm in length and 25 mm in width was formed.
The obtained molded product (plate) was treated for 25 hours with a light resistance tester (EYE SUN-CUBE Xenon SCX400/1-1 from IWASAKI ELECTRIC Co., Ltd.) at an illumination intensity of 60 $W/m^2$, and YI after the treatment was then measured in the same manner as that for YI. A value obtained by subtracting the initial color tone YI (3 mmYI) from YI after the treatment was defined as ΔYI.

[Izod impact strength (low temperature)]

Using a small injection molding machine (C, Mobile from SHINKO SELLBIC Co., LTD.), a polycarbonate resin sample of 3.2 mm in thickness, 53.5 mm in length and 12.7 mm in width was formed under cylinder temperature and mold temperature conditions described in each Example, thereby obtaining a test piece. In conformity with ASTM D256, a cut notch having a notch tip radius of 0.25 mm and a notch depth of 2.54 mm was made at a position of 31.8 mm in a longitudinal direction from an end in the test piece, on which a notched Izod impact test was conducted five times at -20°C using a universal impact tester (Toyo Seiki Seisaku-sho, Ltd.).

[Confirmation of existence or nonexistence of other resins]

Three grams of the polycarbonate resin was molded at 260°C to 7 cm in length, 7 cm in width and 0.5 mm in thickness by heat pressing. The surface of the molded product was scanned by IR (infrared analysis) to determine whether peaks of resins other than the polycarbonate resin contained in raw materials C and D described later were identified or not.

[Raw materials]

The following raw materials A to C were used.

Raw material A: used polycarbonate transparent cup
Raw material B: used automobile polycarbonate head-up lens
Raw material C: used polycarbonate/ABS housings (black) for printers
Raw material D: used automobile member PC/PET/GF (black)

[Reagents]

Solvent: Reagents manufactured by FUJIFILM Wako Pure Chemical Corporation were used for methylene chloride, phenol, cresol, acetone, methanol, ethanol, isopropyl alcohol, heptane, toluene, 1,2-dichloroethane, and ethyl acetate.
Filter aid: Activated carbon, activated white earth and celite manufactured by FUJIFILM Wako Pure Chemical Corporation were used. SEPABEADS (registered trademark) SP700 manufactured by Mitsubishi Chemical Corporation was used as a synthetic adsorbent.
The raw material was pulverized to about 10 mm square with a pulverizer before use. Table 1 shows Mw/Mn of raw materials A to C, contents of terminal hydroxyl groups (terminal OH), and contents of the compound (PSA)

represented by the formula (1). Note that "ppm" in Table 1 is synonymous with "ppm by mass".

[Table 1]

| | Raw material A | Raw material B | Raw material C | Raw material D |
|---|---|---|---|---|
| Mw/Mn | 2.8 | 3.1 | 2.9 | 3.2 |
| Content of terminal OH (ppm) | 223 | 534 | 578 | 594 |
| Content of PSA (ppm) | 258 | 1124 | 429 | 802 |

[Example 1]

At 20°C under a nitrogen atmosphere, a 10 L flask was charged with 500 g of a pulverized product of the raw material A, and 5 kg of methylene chloride, where the methylene chloride was selected as a good solvent, and stirring was performed for 30 minutes. Thereafter, the solution was filtered through a glass filter, and to the filtrate, 6 kg of acetone was added, where the acetone was selected as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 2 shows the results.

[Examples 2 to 6]

Examples 2 to 6 were carried out in the same manner as in Example 1 except that good solvents and poor solvents shown in Table 2 were selected. The dissolution temperature was changed from 20°C in Example 1 to 60°C in Examples 3 to 5, and 50°C in Example 6. With respect to the obtained polycarbonate precipitate, the physical properties were evaluated by the procedures described above. Table 2 shows the results.

[Example 7]

At 20°C under a nitrogen atmosphere, a 10 L flask was charged with 500 g of a pulverized product of the raw material A and 5 kg of acetone, which were stirred for 30 minutes. Thereafter, a polycarbonate resin that remained undissolved was collected by filtration with a paper filter, and dried in a drier at 40°C for 10 hours.

Next, at 20°C under a nitrogen atmosphere, a 10 L flask was charged with 400 g of the polycarbonate resin dried at 40°C, and 5 kg of methylene chloride, where the methylene chloride was selected as a good solvent, and stirring was then performed for 30 minutes to dissolve the polycarbonate resin. To the solution, 6 kg of acetone was added, where the acetone was selected as a poor solvent, with the result that a white polycarbonate precipitate was generated. The polycarbonate precipitate was collected by filtration with a paper filter, and dried at 110°C for 6 hours.

With respect to the obtained polycarbonate precipitate, the physical properties were evaluated by the procedures described above. Table 2 shows the results.

[Example 8]

At 20°C under a nitrogen atmosphere, a 10 L flask was charged with 500 g of a pulverized product of the raw material A and 5 kg of acetone, which were then stirred for 30 minutes. Thereafter, a polycarbonate resin that remained undissolved was collected by filtration with a paper filter, and dried in a drier at 40°C for 10 hours.

Next, at 60°C under a nitrogen atmosphere, a 10 L flask was charged with 400 g of the polycarbonate resin dried at 40°C, and 5 kg of phenol, where the phenol was selected as a good solvent, and stirring was then performed for 30 minutes to dissolve the polycarbonate resin. To the solution, 6 kg of acetone was added, where the acetone was selected as a poor solvent, with the result that a white polycarbonate precipitate was generated. The polycarbonate precipitate was collected by filtration with a paper filter, and dried at 110°C for 6 hours.

With respect to the obtained polycarbonate precipitate, the physical properties were evaluated by the procedures described above. Table 2 shows the results.

[Table 2]

| | | Example 1 | Example 2 | Example 3 | Example 4 | Example 5 | Example 6 | Example 7 | Example 8 |
|---|---|---|---|---|---|---|---|---|---|
| Raw material used | | A | A | A | A | A | A | B | B |
| Pretreatment | | - | - | - | - | - | - | Acetone cleaning | Acetone cleaning |
| Dissolution | Good solvent | Methylene chloride | Methylene chloride | Phenol | Phenol | Phenol | Cresol | Methylene chloride | Phenol |
| Reprecipitation | Poor solvent | Acetone | Methanol | Water | Ethanol | Heptane | Acetone | Acetone | Acetone |
| Mw | | 39600 | 40200 | 39900 | 39500 | 39600 | 38700 | 38900 | 38700 |
| Mn | | 22100 | 21200 | 20600 | 20100 | 20800 | 21100 | 20500 | 23200 |
| Mw/Mn | | 1.8 | 1.9 | 1.9 | 2.0 | 1.9 | 1.8 | 1.9 | 1.7 |
| Mv | | 22700 | 22300 | 21900 | 21700 | 22100 | 22500 | 22200 | 23100 |
| Content of terminal OH (ppm) | | 212 | 198 | 202 | 206 | 225 | 214 | 471 | 492 |
| Content of PSA (ppm) | | 247 | 222 | 211 | 215 | 248 | 242 | 982 | 875 |
| L value | | 96.6 | 97.4 | 97.0 | 97.5 | 96.8 | 96.2 | 95.5 | 92.1 |
| 3 mmYI | | 1.6 | 1.5 | 1.5 | 1.5 | 1.7 | 1.6 | 1.8 | 2.1 |
| Weather resistance test (ΔYI) | | 1.1 | 1.1 | 1.2 | 1.3 | 1.3 | 1.2 | 1.3 | 1.4 |
| Izod impact strength (-20°C) (J/m) | | 254 | 242 | 248 | 262 | 298 | 273 | 287 | 294 |

[Examples 9 to 16]

Examples 9 to 16 were carried out in the same manner as in Example 1 except that the types and the amounts of good solvents and poor solvents were those shown in Table 3. Note that in Examples 15 and 16, phenol and toluene were mixed at 1 : 1 (mass ratio), the mixture was used as a good solvent, and the dissolution temperature was 60°C.
The ratio of the mass of the obtained recycled polycarbonate resin after drying to the mass of the raw material used was calculated as a yield. Table 3 shows the results.

[Table 3]

| | | Example 1 | Example 9 | Example 10 | Example 11 | Example 12 | Example 13 | Example 14 | Example 15 | Example 16 |
|---|---|---|---|---|---|---|---|---|---|---|
| Good solvent | Type | Methylene chloride | Methylene chloride | Methylene chloride | Methylene chloride | Methylene chloride | Methylene chloride | Methylene chloride | Phenol/ toluene | Phenol/ toluene |
| | Mass ratio to raw material (mass%) | 1000 | 3900 | 200 | 100 | 5900 | 400 | 1900 | 900 | 5900 |
| Poor solvent | Type | Acetone | Acetone | Acetone | Acetone | Acetone | Heptane | Water | Acetone | Acetone |
| | Mass ratio to raw material (mass%) | 1200 | 4000 | 200 | 100 | 6000 | 800 | 1900 | 900 | 7000 |
| Yield (%) | | 85.5 | 84.3 | 80.3 | 68.7 | 75.2 | 70.2 | 72.1 | 84.2 | 68.9 |

[Example 17]

At 20°C under a nitrogen atmosphere, a 10 L flask was charged with 500 g of a pulverized product of the raw material B, 5 kg of methylene chloride, where the methylene chloride was selected as a good solvent, and 200 g of activated carbon, and stirring was performed for 30 minutes. Thereafter, the solution was filtered through a glass filter lined with 300 g of activated carbon, and to the filtrate, 6 kg of isopropyl alcohol was added, where the isopropyl alcohol was selected as a poor solvent, with the result that a white polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 4 shows the results.

[Example 18]

At 20°C under a nitrogen atmosphere, a 10 L flask was charged with 500 g of a pulverized product of the raw material B, 5 kg of methylene chloride, where the methylene chloride was selected as a good solvent, and 200 g of activated white earth, and stirring was performed for 30 minutes. Thereafter, the solution was filtered through a glass filter, and to the filtrate, 3 kg of each of acetone and ethanol was added, where the acetone and the ethanol were selected as a poor solvent, with the result that a white polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 4 shows the results.

[Example 19]

At 20°C under a nitrogen atmosphere, a 10 L flask was charged with 500 g of a pulverized product of the raw material B, 5 kg of methylene chloride, where the methylene chloride was selected as a good solvent, and 200 g of activated white earth, and stirring was performed for 30 minutes. Thereafter, the solution was filtered through a glass filter lined with 300 g of celite, and to the filtrate, 6 kg of acetone was added, where the acetone was selected as a poor solvent, with the result that a white polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 4 shows the results.

[Example 20]

At 60°C under a nitrogen atmosphere, a 10 L flask was charged with 500 g of a pulverized product of the raw material B, 5 kg of phenol, where the phenol was selected as a good solvent, and 200 g of activated carbon, and stirring was performed for 30 minutes. Thereafter, the solution was filtered through a glass filter, and to the filtrate, 6 kg of isopropyl alcohol was added, where the isopropyl alcohol was selected as a poor solvent, with the result that a white polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 4 shows the results.

[Example 21]

At 60°C under a nitrogen atmosphere, a 10 L flask was charged with 500 g of a pulverized product of the raw material B, 5 kg of phenol, where the phenol was selected as a good solvent, and 200 g of activated carbon, and stirring was performed for 30 minutes. Thereafter, the solution was filtered through a glass filter, and to the filtrate, 6 kg of methanol was added, where the methanol was selected as a poor solvent, with the result that a white polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 4 shows the results.

[Example 22]

At 60°C under a nitrogen atmosphere, a 10 L flask was charged with 500 g of a pulverized product of the raw

material B, 5 kg of a solvent obtained by mixing phenol and toluene at 4 : 6 (mass ratio), where the mixed solvent was selected as a good solvent, and 200 g of activated white earth, and stirring was performed for 30 minutes. Thereafter, the solution was filtered through a glass filter, and to the filtrate, 6 kg of methanol was added, where the methanol was selected as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 4 shows the results.

[Table 4]

| | | Example 17 | Example 18 | Example 19 | Example 20 | Example 21 | Example 22 |
|---|---|---|---|---|---|---|---|
| Raw material used | | B | B | B | B | B | B |
| Dissolution (first time) | Good solvent | Methylene chloride | Methylene chloride | Methylene chloride | Phenol | Phenol | Phenol/ toluene |
| | Filter aid | Activated carbon | Activated white earth | Activated white earth + celite | Activated carbon | Activated carbon | Activated white earth |
| Reprecipitation (first time) | Poor solvent | Isopropyl alcohol | Ethanol + acetone | Acetone | Isopropyl alcohol | Methanol | Water |
| Mw | | 38700 | 39500 | 38400 | 39700 | 38900 | 39800 |
| Mn | | 21900 | 18200 | 19300 | 22900 | 22100 | 23200 |
| Mw/Mn | | 1.8 | 2.2 | 2.0 | 1.7 | 1.8 | 1.7 |
| Mv | | 22000 | 21500 | 22100 | 23400 | 22900 | 22600 |
| Content of terminal OH (ppm) | | 502 | 513 | 448 | 508 | 512 | 481 |
| Content of PSA (ppm) | | 932 | 1092 | 587 | 946 | 899 | 912 |
| L value | | 98.1 | 95.3 | 97.3 | 95.6 | 95.0 | 96.2 |
| 3 mmYI | | 1.6 | 2.1 | 1.7 | 2.2 | 2.1 | 1.9 |
| Weather resistance test (ΔYI) | | 1.3 | 1.5 | 1.4 | 1.5 | 1.5 | 1.3 |
| Izod impact strength (-20°C) (J/m) | | 285 | 102 | 318 | 205 | 205 | 269 |

[Example 23]

At 20°C under a nitrogen atmosphere, a 10 L flask was charged with 500 g of a pulverized product of the raw material C, 5 kg of methylene chloride, where the methylene chloride was selected as a good solvent, and 200 g of activated white earth, and stirring was performed for 30 minutes. Thereafter, the solution was filtered through a glass filter, and to the filtrate, 6 kg of acetone was added, where the acetone was selected as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 5 shows the results.

[Example 24]

At 20°C under a nitrogen atmosphere, a 10 L flask was charged with 500 g of a pulverized product of the raw material C, 5 kg of methylene chloride, where the methylene chloride was selected as a good solvent, and 500 g of SP700, and stirring was performed for 30 minutes. Thereafter, the solution was filtered through a glass filter, and to the filtrate, 6 kg of hot water (40°C) was added, where the hot water was selected as a poor solvent, with the result that a white polycarbonate precipitate was generated. The polycarbonate precipitate was collected by filtration with a paper filter,

and dried in a drier at 40°C for 10 hours.

Next, at 20°C under a nitrogen atmosphere, a 10 L flask was charged with 380 g of the polycarbonate precipitate dried at 40°C, and 5 kg of methylene chloride as a good solvent, and stirring was performed for 30 minutes to dissolve the polycarbonate precipitate. To the solution, 6 kg of acetone was added as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 5 shows the results.

[Example 25]

At 20°C under a nitrogen atmosphere, a 10 L flask was charged with 500 g of a pulverized product of the raw material D, 5 kg of methylene chloride, where the methylene chloride was selected as a good solvent, and 200 g of activated carbon, and stirring was performed for 30 minutes. Thereafter, the solution was filtered through a glass filter, and to the filtrate, 6 kg of acetone was added, where the acetone was selected as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 5 shows the results.

[Example 26]

At 20°C under a nitrogen atmosphere, a 10 L flask was charged with 500 g of a pulverized product of the raw material C, 5 kg of a solvent obtained by mixing phenol and toluene at 3 : 7 (mass ratio), where the mixed solvent was selected as a good solvent, and 200 g of activated carbon, and stirring was performed for 30 minutes. Thereafter, the solution was filtered through a glass filter, and to the filtrate, 6 kg of acetone was added, where the acetone was selected as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 5 shows the results.

[Example 27]

At 20°C under a nitrogen atmosphere, a 10 L flask was charged with 500 g of a pulverized product of the raw material D, 5 kg of a solvent obtained by mixing phenol and toluene at 3 : 7 (mass ratio), where the mixed solvent was selected as a good solvent, and 200 g of activated carbon, and stirring was performed for 30 minutes. Thereafter, the solution was filtered through a glass filter, and to the filtrate, 6 kg of acetone was added, where the acetone was selected as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 5 shows the results.

[Example 28]

At 20°C under a nitrogen atmosphere, a 10 L flask was charged with 500 g of a pulverized product of the raw material D, 5 kg of a solvent obtained by mixing phenol and toluene at 7 : 3 (mass ratio), where the mixed solvent was selected as a good solvent, and 200 g of activated carbon, and stirring was performed for 30 minutes. Thereafter, the solution was filtered through a glass filter, and to the filtrate, 6 kg of acetone was added, where the acetone was selected as a poor solvent, with the result that a white polycarbonate precipitate was generated. The polycarbonate precipitate was collected by filtration with a paper filter, and dried in a drier at 40°C for 10 hours.

With respect to the obtained polycarbonate precipitate, the physical properties were evaluated by the procedures described above. Table 5 shows the results.

[Table 5]

| | | Example 23 | Example 24 | Example 25 | Example 26 | Example 27 | Example 28 |
|---|---|---|---|---|---|---|---|
| Raw material used | | C | C | D | C | D | D |
| Dissolution (first time) | Good solvent | Methylene chloride | Methylene chloride | Methylene chloride | Phenol/toluene | Phenol/toluene | Phenol/toluene |
| | Amount of phenol based on good solvent (mass %) | - | - | - | 30 | 30 | 70 |
| | Filter aid | Activated white earth | SEPABEADS SP700 | Activated carbon | Activated carbon | Activated carbon | Activated carbon |
| Reprecipitation (first time) | Poor solvent | Acetone | Hot water | Acetone | Acetone | Acetone | Acetone |
| Dissolution (second time) | Good solvent | | Methylene chloride | - | - | - | - |
| Reprecipitation (second time) | Poor solvent | - | Acetone | - | - | - | - |
| Mw | | 39800 | 39900 | 39800 | 39500 | 40300 | 39600 |
| Mn | | 21200 | 19400 | 20200 | 22500 | 22100 | 18500 |
| Mw/Mn | | 1.9 | 2.1 | 2.0 | 1.8 | 1.8 | 2.1 |
| Mv | | 22500 | 21800 | 22300 | 22500 | 22900 | 20200 |
| Content of terminal OH (ppm) | | 488 | 524 | 552 | 534 | 338 | 423 |
| Content of PSA (ppm) | | 587 | 426 | 752 | 392 | 797 | 832 |
| L value | | 94.8 | 96.1 | 96.7 | 95.2 | 94.3 | 91.5 |
| 3 mmYI | | 1.9 | 1.8 | 2.0 | 2.0 | 2.1 | 2.2 |
| Weather resistance test (ΔYI) | | 1.2 | 1.3 | 1.4 | 1.4 | 1.4 | 1.5 |
| Izod impact strength (-20°C) (J/m) | | 269 | 172 | 168 | 210 | 204 | 152 |
| Comment | | ABS was not identified by IR | ABS was not identified by IR | PET was not identified by IR | ABS was not identified by IR | PET was not identified by IR | Slight peak of PET was identified by IR |

[Comparative Example 1]

At 20°C under a nitrogen atmosphere, a 10 L flask was charged with 500 g of a pulverized product of the raw material A, and 5 kg of 1,2-dichloroethane, where the 1,2-dichloroethane was selected as a good solvent, and stirring was performed for 30 minutes. Thereafter, the solution was filtered through a glass filter, and to the filtrate, 6 kg of ethyl acetate was added, where the ethyl acetate was selected as a poor solvent, with the result that a gray polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 6 shows the results.

[Comparative Example 2]

At 20°C under a nitrogen atmosphere, a 10 L flask was charged with 500 g of a pulverized product of the raw material A, and 5 kg of methylene chloride, where the methylene chloride was selected as a good solvent, and stirring was performed for 30 minutes. Thereafter, the solution was filtered through a glass filter, and to the filtrate, 6 kg of ethyl acetate was added, where the ethyl acetate was selected as a poor solvent, with the result that a slightly blackish polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 6 shows the results.

[Comparative Example 3]

At 20°C under a nitrogen atmosphere, a 10 L flask was charged with 500 g of a pulverized product of the raw material B, and 5 kg of 1,2-dichloroethane, where the 1,2-dichloroethane was selected as a good solvent, and stirring was performed for 30 minutes. Thereafter, the solution was filtered through a glass filter, and to the filtrate, 6 kg of ethyl acetate was added, where the ethyl acetate was selected as a poor solvent, with the result that a gray polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 6 shows the results.

[Comparative Example 4]

At 20°C under a nitrogen atmosphere, a 10 L flask was charged with 500 g of a pulverized product of the raw material B, and 5 kg of 1,2-dichloroethane, where the 1,2-dichloroethane was selected as a good solvent, and stirring was performed for 30 minutes. Thereafter, the solution was filtered through a glass filter, and to the filtrate, 6 kg of methanol was added, where the methanol was selected as a poor solvent, with the result that a white polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 6 shows the results.

[Comparative Example 5]

At 20°C under a nitrogen atmosphere, a 10 L flask was charged with 500 g of a pulverized product of the raw material C, and 5 kg of 1,2-dichloroethane, where the 1,2-dichloroethane was selected as a good solvent, and stirring was performed for 30 minutes. Thereafter, the solution was filtered through a glass filter, and to the filtrate, 6 kg of ethyl acetate was added, where the ethyl acetate was selected as a poor solvent, with the result that a gray polycarbonate precipitate was generated. The polycarbonate precipitate was collected by filtration with a paper filter, and dried in a drier at 40°C for 10 hours.
With respect to the obtained polycarbonate precipitate, the physical properties were evaluated by the procedures described above. Table 6 shows the results.

[Reference Example 1]

With S3000N manufactured by Mitsubishi Engineering-Plastics Corporation, the physical properties were

evaluated by the procedures described above. Table 6 shows the results.

[Table 6]

| | | Comparative Example 1 | Comparative Example 2 | Comparative Example 3 | Comparative Example 4 | Comparative Example 5 | Reference Example 1 |
|---|---|---|---|---|---|---|---|
| Raw material used | | A | A | B | B | C | S3000N |
| Dissolution (first time) | Good solvent | 1,2-Dichloroethane | Methylene chloride | 1,2-Dichloroethane | 1,2-Dichloroethane | 1,2-Dichloroethane | - |
| | Filter aid | - | - | - | - | - | - |
| Reprecipitation (first time) | Poor solvent | Ethyl acetate | Ethyl acetate | Ethyl acetate | Methanol | Ethyl acetate | - |
| Mw | | 40300 | 39700 | 40100 | 38200 | 37200 | 39800 |
| Mn | | 14500 | 15200 | 15000 | 14300 | 14300 | 14900 |
| Mw/Mn | | 2.8 | 2.6 | 2.7 | 2.7 | 2.6 | 2.7 |
| Mv | | 21500 | 22100 | 21800 | 21300 | 21900 | 22300 |
| Content of terminal OH (ppm) | | 212 | 232 | 529 | 538 | 550 | 63 |
| Content of PSA (ppm) | | 243 | 285 | 1087 | 1022 | 421 | 23 |
| L value | | 88.3 | 90.1 | 86.5 | 93.2 | 84.3 | 95.2 |
| 3 mmYI | | 2.5 | 2.2 | 2.4 | 3.8 | 3.1 | 1.5 |
| Weather resistance test (ΔYI) | | 2.0 | 1.8 | 2.1 | 2.4 | 2.2 | 0.9 |
| Izod impact strength (-20°C) (J/m) | | 82 | 68 | 103 | 90 | 93 | 357 |

## Claims

1. A method for producing a recycled polycarbonate resin in which a recycled polycarbonate resin is obtained from a spent polycarbonate resin composition,

   wherein Mw/Mn of a polycarbonate resin contained in the spent polycarbonate resin composition is 2.8 or more, and
   Mw/Mn of the recycled polycarbonate resin is 2.2 or less,
   where Mw/Mn is a ratio between a weight average molecular weight Mw and a number average molecular weight Mn in terms of polystyrene which are measured by gel permeation chromatography,
   the method comprising the following steps (S1) to (S3):

   step (S1): preparing a polycarbonate resin solution by dissolving the spent polycarbonate resin composition in a good solvent containing methylene chloride and/or a phenol-based solvent;
   step (S2): precipitating the recycled polycarbonate resin by mixing the polycarbonate resin solution and a poor solvent containing one or more selected from the group consisting of a ketone-based solvent, an alcohol-based solvent, a saturated hydrocarbon-based solvent and water; and
   step (S3): recovering the precipitated recycled polycarbonate resin.

2. The method for producing a recycled polycarbonate resin according to claim 1, comprising, before the step (S2), a step of contacting the polycarbonate resin solution and one or more filter aids selected from the group consisting of celite, activated white earth, activated carbon and a synthetic adsorbent, and removing undissolved substances to prepare a solution (L) free of undissolved substances,
   the solution (L) being used as the polycarbonate resin solution in the step (S2).

3. The method for producing a recycled polycarbonate resin according to claim 1, comprising, before the step (S2), a step of removing undissolved substances from the polycarbonate resin solution to prepare a solution (L) free of undissolved substances,
   the solution (L) being used as the polycarbonate resin solution in the step (S2).

4. The method for producing a recycled polycarbonate resin according to claim 1, wherein a proportion of the polycarbonate resin contained in the spent polycarbonate resin composition is 20 % by mass or more.

5. The method for producing a recycled polycarbonate resin according to claim 1, wherein the spent polycarbonate resin composition contains one or more selected from the group consisting of another resin, an inorganic substance and a low-molecular organic compound.

6. The method for producing a recycled polycarbonate resin according to claim 4 or 5, wherein the good solvent used in the step (S1) is a solvent containing methylene chloride, or a solvent containing 50 % by mass or less of a phenol-based solvent.

7. The method for producing a recycled polycarbonate resin according to claim 1 or 2, wherein the good solvent used in the step (S1) is 200 % by mass or more and 5,000 % by mass or less based on the spent polycarbonate resin composition.

8. The method for producing a recycled polycarbonate resin according to claim 1 or 2, wherein the poor solvent used in the step (S2) is 200 % by mass or more and 5,000 % by mass or less based on the spent polycarbonate resin composition.

9. The method for producing a recycled polycarbonate resin according to claim 1 or 2, wherein a content of terminal hydroxyl groups in the recycled polycarbonate resin is 200 to 530 ppm by mass, and a content of structural units contained in a main chain of the recycled polycarbonate resin and each represented by the following formula (1) is 200 to 1,100 ppm by mass:

[Formula 1]

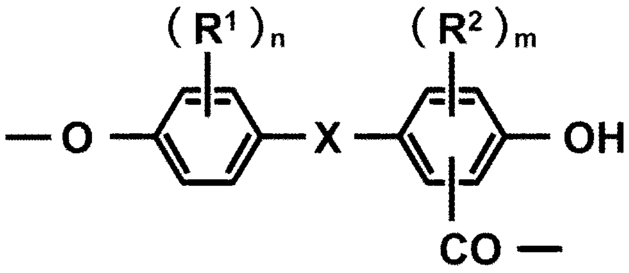

(1)

wherein X is one selected from the group consisting of a single bond, an alkylene group having 2 to 8 carbon atoms, a cycloalkylene group having 5 to 15 carbon atoms, an alkylidene group having 1 to 8 carbon atoms, a cycloalkylidene group having 5 to 15 carbon atoms, a fluorenylidene group, a xanthenylidene group, a thioxanthenylidene group, -O-, -S-, -CO-, -SO- and $-SO_2-$,
$R^1$ and $R^2$ are each independently one selected from the group consisting of a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms, and
n and m are each independently an integer of 0 to 3.

**10.** The method for producing a recycled polycarbonate resin according to claim 1 or 2, wherein a viscosity average molecular weight of the recycled polycarbonate resin is larger than 19,000.

**11.** A recycled polycarbonate resin reclaimed from a spent polycarbonate resin composition, wherein Mw/Mn is 2.2 or less, where Mw/Mn is a ratio between a weight average molecular weight Mw and a number average molecular weight Mn in terms of polystyrene which are measured by gel permeation chromatography.

**12.** The recycled polycarbonate resin according to claim 11, wherein a content of terminal hydroxyl groups in the recycled polycarbonate resin is 200 to 530 ppm by mass.

**13.** The recycled polycarbonate resin according to claim 11 or 12, wherein a content of structural units contained in a main chain of the recycled polycarbonate resin and each represented by the following formula (1) is 200 to 1,100 ppm by mass:

[Formula 2]

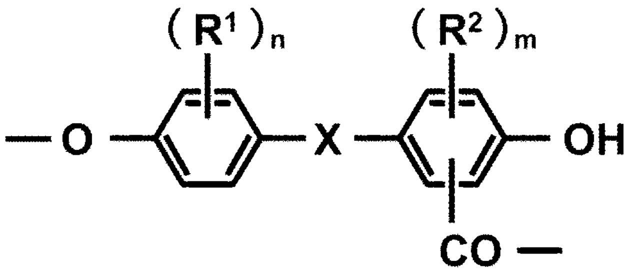

(1)

wherein X is one selected from the group consisting of a single bond, an alkylene group having 2 to 8 carbon atoms, a cycloalkylene group having 5 to 15 carbon atoms, an alkylidene group having 1 to 8 carbon atoms, a cycloalkylidene group having 5 to 15 carbon atoms, a fluorenylidene group, a xanthenylidene group, a thioxanthenylidene group, -O-, -S-, -CO-, -SO- and $-SO_2-$,
$R^1$ and $R^2$ are each independently one selected from the group consisting of a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms, and
n and m are each independently an integer of 0 to 3.

**14.** The recycled polycarbonate resin according to claim 11 or 12, wherein a viscosity average molecular weight of the recycled polycarbonate resin is larger than 19,000.

## INTERNATIONAL SEARCH REPORT

International application No.
**PCT/JP2023/046661**

**A. CLASSIFICATION OF SUBJECT MATTER**

***C08J 11/08***(2006.01)i; ***B29B 17/02***(2006.01)i; ***C08G 64/40***(2006.01)i
FI: C08J11/08 ZAB; B29B17/02; C08G64/40

According to International Patent Classification (IPC) or to both national classification and IPC

**B. FIELDS SEARCHED**

Minimum documentation searched (classification system followed by classification symbols)

C08J11/08; B29B17/02; C08G64/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-152371 A (GENERAL ELECTRIC COMPANY) 08 June 1999 (1999-06-08)<br>entire text | 1-14 |
| A | JP 63-77932 A (SONY CORPORATION) 08 April 1988 (1988-04-08)<br>p. 4, upper right column, line 5 to lower left column, line 2 | 1-14 |
| A | CN 102911397 A (GUANGDONG SHUYE ENVIRONMENTAL PROTECTION TECHNOLOGY CO., LTD.) 06 February 2013 (2013-02-06)<br>entire text | 1-14 |
| A | CN 109679137 A (SHUYE ENVIRONMENTAL TECHNOLOGY CO., LTD.) 26 April 2019 (2019-04-26)<br>entire text | 1-14 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/046661**

| Patent document cited in search report | Publication date (day/month/year) | Patent family member(s) | Publication date (day/month/year) |
|---|---|---|---|
| JP 11-152371 A | 08 June 1999 | AU 8189798 A<br>entire text<br>BR 9802294 A<br>SG 81227 A1<br>KR 10-1999-0029426 A | |
| JP 63-77932 A | 08 April 1988 | US 5993971 A<br>column 4, lines 28-59<br>GB 2197345 A<br>DE 3731514 A1<br>FR 2604279 A1<br>KR 10-1988-0004447 A | |
| CN 102911397 A | 06 February 2013 | (Family: none) | |
| CN 109679137 A | 26 April 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022075133 A
- JP 11152371 A
- JP 2004182746 A


### Non-patent literature cited in the description


- *Macromol. Chem.*, 1965, vol. 88, 215